# EUROPEAN PATENT APPLICATION

(11) **EP 4 797 044 A1**
(43) Date of publication of application: **26.08.2026**
(21) Application number: 25869578.2
(22) Date of filing: 24.03.2025
(51) Int. Cl.: G06F 1/18

(54) **DIRECT-ATTACHED HARD DISK SYSTEM, HARD DISK DAUGHTER BOARD, AND SERVER**

(30) Priority: 31.12.2024 CN 202412000260
(71) Applicant: Suzhou Metabrain Intelligent Technology Co., Ltd., Suzhou, Jiangsu 215000 (CN)
(72) Inventor: YU, Quanquan, Suzhou, Jiangsu 215000 (CN); FU, Shuilun, Suzhou, Jiangsu 215000 (CN); WANG, Huanchao, Suzhou, Jiangsu 215000 (CN)
(74) Representative: Studio Torta S.p.A.
(86) International application number: PCT/CN2025/084361
(87) International publication number: WO 2026/143871

(57) **Abstract**

The present invention relates to the technical field of servers. Specifically disclosed are a direct-attached hard disk system, a hard disk sub-board, and a server. By designing the hard disk sub-board and a backplane board card, which are detachably connected, the hard disk sub-board is detachably connected to the backplane board card via a first hard disk state signal connector; an uplink data interface of a hard disk connector on the hard disk sub-board is directly connected to a server motherboard via a high-speed signal line, and a downlink data interface of the hard disk connector is connected to a hard disk; and a hard disk state signal and a power signal of the hard disk connector are connected to a backplane controller of the backplane board card via the first hard disk state signal connector. Compared to a conventional direct-attached hard disk backplane, a universal backplane board card may be reused across generations, and the corresponding hard disk sub-board needs to be simply added according to the number and type of the hard disks, such that a high-speed signal link is shortened, impedance design difficulty is reduced, heat dissipation is facilitated, and overall noise and power consumption are reduced.

## Description

### Cross-Reference to Related Application

The present invention claims priority and the benefit of the Chinese Patent Application filed with the China National Intellectual Property Administration (CNIPA) on December 20, 2024, with the application number. 202412000260.5, entitled "DIRECT-ATTACHED HARD DISK SYSTEM, HARD DISK SUB-BOARD AND SERVER", which is herein incorporated by reference in its entirety.

### Technical Field

The present invention relates to the technical field of servers, and in particular to a direct-attached hard disk system, a hard disk sub-board, and a server.

### Background

The direct-attached hard disk backplane is one of the key components of a server system and serves as a bridge connecting a server motherboard to a storage unit (hard disk). The current direct-attached hard disk backplane needs to access a high-speed transmission signal of the hard disk to provide functions such as power supply, state monitoring, expansion of the number of hard disks, etc. for the hard disk. However, limited by various hard disk forms, bandwidths, and rate types, the device layout and routing manner of each backplane are different and cannot be reused between each other, resulting in the need to continuously change the structural design of the direct-attached hard disk backplane as the storage architecture of the server is constantly updated.

How to improve the universality of a direct-attached hard disk backplane of a server is a technical problem to be solved by a person skilled in the art.

### Summary

The present invention provides a direct-attached hard disk system, including a hard disk sub-board and a backplane board card.

The hard disk sub-board includes a hard disk connector and a first hard disk state signal connector; and the hard disk sub-board is detachably connected to the backplane board card via the first hard disk state signal connector.

An uplink data interface of the hard disk connector is directly connected to a downlink connector of a server motherboard via a high-speed signal line, and a downlink data interface of the hard disk connector is configured to connect to a hard disk; and a hard disk state signal and a power signal of the hard disk connector are connected to a backplane controller of the backplane board card via the first hard disk state signal connector.

In some embodiments of the present invention, the uplink data interface of the hard disk connector is connected to the downlink connector of the server motherboard via a high-speed signal cable.

In some embodiments of the present invention, the first hard disk state signal connector is connected to a second hard disk state signal connector of the backplane board card in an insertion manner.

In some embodiments of the present invention, the direct-attached hard disk system further includes a limiting apparatus, which is fixedly arranged on the backplane board card and configured to fix the hard disk sub-board, the hard disk sub-board is provided with a snap-fit and a snap-fit loosening structure, and the limiting apparatus is provided with a limiting structure corresponding to the snap-fit and the snap-fit loosening structure.

In some embodiments of the present invention, a high-speed signal link of the hard disk connector and a hard disk state signal line between the hard disk connector and the first hard disk state signal connector are arranged at 90°.

In some embodiments of the present invention, the high-speed signal line includes a high-speed clock signal line and a high-speed data signal line.

In some embodiments of the present invention, the high-speed signal line is a high-speed data signal line.

In some embodiments of the present invention, a reset pin and a device hot-swap management pin of the first hard disk state signal connector are connected to the downlink connector of the server motherboard via a solder wire connector of the hard disk sub-board and a cable.

In some embodiments of the present invention, the backplane board card includes a second hard disk state signal connector, the backplane controller, an inter-integrated circuit connector, a field replaceable unit, a thermal sensor, and a power connector.

The second hard disk state signal connector is configured to connect the first hard disk state signal connector to the backplane controller.

The inter-integrated circuit connector is configured to connect the server motherboard to the backplane controller, and the field replaceable unit and the thermal sensor are connected to the inter-integrated circuit connector.

The power connector is configured to connect to a power supply of the server motherboard and convert the power supply into a power supply output required by the backplane board card.

In some embodiments of the present invention, the backplane board card further includes an inter-integrated circuit channel switching chip; a first end of the inter-integrated circuit channel switching chip is connected to a second end of the inter-integrated circuit connector; a first end of the inter-integrated circuit connector is connected to an out-of-band monitoring system of the server motherboard; and a second end of the inter-integrated circuit channel switching chip is connected to the first hard disk state signal connectors of the plurality of corresponding hard disk sub-boards via the plurality of the second hard disk state signal connectors.

In some embodiments of the present invention, the hard disk sub-board is connected to the hard disk in a one-to-one correspondence connection.

In some embodiments of the present invention, a plurality of hard disk sub-boards are provided, the plurality of the hard disk sub-boards are horizontally arranged and uniformly mounted on the backplane board card.

The present invention further provides a hard disk sub-board, including:
a hard disk connector, wherein an uplink data interface of the hard disk connector is directly connected to a downlink connector of a server motherboard via a high-speed signal line, and a downlink data interface of the hard disk connector is configured to connect to a hard disk; and
a first hard disk state signal connector, the first hard disk state signal connector connected to a backplane controller of a backplane board card and configured to transmit a hard disk state signal and a power signal.

The hard disk connector and the first hard disk state signal connector are configured as separate components, and the hard disk state signal of the hard disk connector is connected to the first hard disk state signal connector.

In some embodiments of the present invention, the uplink data interface of the hard disk connector is connected to the downlink connector of the server motherboard via a high-speed signal cable.

In some embodiments of the present invention, the first hard disk state signal connector is connected to a second hard disk state signal connector of the backplane board card in an insertion manner.

In some embodiments of the present invention, a high-speed signal link of the hard disk connector and a hard disk state signal line between the hard disk connector and the first hard disk state signal connector are arranged at 90°.

In some embodiments of the present invention, the hard disk sub-board is connected to the hard disk in a one-to-one correspondence connection.

The present invention further provides a server, including a server motherboard, a direct-attached hard disk system, and a hard disk.

The direct-attached hard disk system includes a hard disk sub-board and a backplane board card.

The hard disk sub-board includes a hard disk connector and a first hard disk state signal connector; and the hard disk sub-board is detachably connected to the backplane board card via the first hard disk state signal connector.

An uplink data interface of the hard disk connector is directly connected to a downlink connector of a server motherboard via a high-speed signal line, and a downlink data interface of the hard disk connector is configured to connect to the hard disk; and a hard disk state signal and a power signal of the hard disk connector are connected to a backplane controller of the backplane board card via the first hard disk state signal connector.

In some embodiments of the present invention, the backplane board card is mounted horizontal to the server motherboard, and the hard disk sub-board is mounted vertically on the backplane board card.

In some embodiments of the present invention, the backplane board card is mounted vertically on the server motherboard, and the hard disk sub-board is horizontal to the server motherboard and mounted vertically on the backplane board card.

### Brief Description of the Drawings

The drawings to be used in description of embodiments or prior art will be briefly introduced below in order to illustrate the technical solutions in the embodiments of the present invention or prior art more clearly. The drawings described below are only some embodiments of the present invention. A person of ordinary skill in the art may obtain other drawings according to these drawings without creative work.
FIG. 1 is a schematic structural diagram of a conventional direct-attached hard disk backplane.
FIG. 2 is a schematic structural diagram of a direct-attached hard disk backplane according to one or more embodiments of the present invention.
FIG. 3 is a schematic diagram of an assembly structure of a direct-attached hard disk system according to one or more embodiments of the present invention.
FIG. 4 is a schematic diagram of a mounting structure of a direct-attached hard disk system and a hard disk according to one or more embodiments of the present invention.
FIG. 5 is a side view of a mounting slot according to one or more embodiments of the present invention.
FIG. 6 is a schematic structural diagram of the mounting slot from another perspective view according to one or more embodiments of the present invention.
FIG. 7 is a schematic diagram of a mounting structure of a hard disk sub-board and a mounting slot according to one or more embodiments of the present invention.
FIG. 8 is a schematic diagram of a three-dimensional structure of a hard disk sub-board separated from a mounting slot according to one or more embodiments of the present invention.
FIG. 9 is an enlarged schematic structural diagram of part A in the hard disk sub-board shown in FIG. 8.
FIG. 10 is a schematic diagram of a connection manner of a direct-attached hard disk backplane according to one or more embodiments of the present invention.
FIG. 11 is a schematic diagram of another connection manner of a direct-attached hard disk backplane according to one or more embodiments of the present invention.
FIG. 12 is a side view of a chassis when a backplane board card is horizontally arranged according to one or more embodiments of the present invention.
FIG. 13 is a front view of a chassis when a backplane board card is horizontally arranged according to one or more embodiments of the present invention.
FIG. 14 is a side view of a chassis when a backplane board card is vertically arranged according to one or more embodiments of the present invention.
FIG. 15 is a front view of a chassis when a backplane board card is vertically arranged according to one or more embodiments of the present invention.

Reference numerals:
1-Backplane board card, 21-Hard disk sub-board, 211-Hard disk slot, 213-Gold finger, 214-Insertion component, 2141-Wire end stop surface, 216-Avoidance slot, 217-Elastic component, 2171-Locking portion, 2172-Connecting leg, 2173-Pull strap connecting edge, 2174-Limiting edge, 2175-Limiting stopper, 218-Pull strap channel, 22-Mounting slot, 221-Signal connection end, 222-Insertion pin, 223-Gold finger slot, 224-Signal terminal, 225-Insertion cavity, 226-Guiding sliding groove, 2261-Arc chamfer, 227-Board end stop surface, 228-Lock catch, 229-Board end guiding edge, 23-Cable, 3-Hard disk, 4-Server motherboard, 401-Downlink connector, and 402-Cable connector.

### Detailed Description of the Embodiments

The present invention provides a direct-attached hard disk system, a hard disk sub-board, and a server, so as to improve the universality of the direct-attached hard disk backplane of the server.

The embodiments of the present invention will be described clearly and completely below with reference to the accompanying drawings in the embodiments of the present invention. The described embodiments of the present invention are merely some rather than all of the embodiments of the present invention. All the other embodiments obtained by a person of ordinary skill in the art based on the embodiments in the present invention without creative effort fall within the scope of protection of the present invention.

The direct-attached hard disk backplane (hereinafter referred to as the hard disk backplane) is a key component in a data center and server storage solution. The hard disk backplane supports large-scale data storage and high-performance data processing requirements by providing a plurality of hard disk connection ports and high-speed data transmission capabilities. In a server, the direct-attached hard disk backplane is an electronic device configured to connect a hard disk to a server motherboard, provides a fixed position for the hard disk, and connects the hard disk to an interface on the motherboard. The backplane is provides with the plurality of hard disk connection ports, so as to support high-speed data access. The design of the direct-attached hard disk backplane needs to consider a size of the hard disk, an interface type, a power system, a size of the backplane, a mechanical structure, etc.

In the embodiments of the present invention, the main functions of the direct-attached hard disk backplane include the following four aspects.
(1) A transmission signal is accessed to provide a transmission path for a high-speed signal and a management signal of a hard disk. The direct-attached hard disk backplane is provided with an uplink connector to connect a signal of a source end, such as a signal output by a disk logical array controller; and the direct-attached hard disk backplane is provided with a downlink connector to connect a signal of a hard disk end.
(2) Power supply is provided to the hard disk. A power supply interface of the direct-attached hard disk backplane may provide a working power supply for the hard disks and devices on the direct-attached hard disk backplane, and some direct-attached hard disk backplanes further support a hard disk sequential power-on function.
(3) Hard disk alarm is supported. Monitoring and management chips arranged on some direct-attached hard disk backplanes are responsible for uploading a working state of the hard disk and an alarm signal of the hard disk to a source controller via the transmission path, or may also receive a control instruction from the source controller and issue the instruction to the hard disk end or light up various state indicator lamps on the direct-attached hard disk backplanes.
(4) The number of hard disks is expanded. Some direct-attached hard disk backplanes support an expansion interface, and the expansion interface may be connected to a next-level backplane for supporting more hard disks.

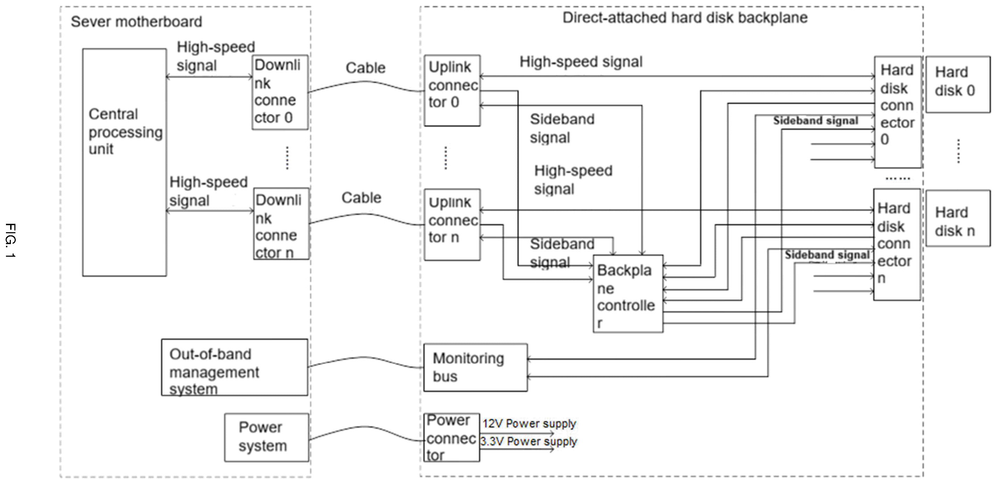

FIG. 1 is a schematic structural diagram of a conventional direct-attached hard disk backplane.

The conventional direct-attached hard disk backplane is composed of an integral board. As shown in FIG. 1, a board card of the conventional direct-attached hard disk backplane includes an uplink connector, a hard disk connector, and a backplane controller. The uplink connectors 0-n on the direct-attached hard disk backplane are correspondingly connected to downlink connectors 0-n of the server motherboard on a one-to-one basis via cables, so as to transmit a high-speed signal between a central processing unit and the hard disk. On the direct-attached hard disk backplane, the hard disk connectors 0-n are correspondingly connected to the uplink connectors 0-n on a one-to-one basis via on-board routes. That is to say, a high-speed signal link between the hard disk and the central processing unit includes at least an on-board route between the central processing unit and the downlink connector on the server motherboard, a cable between the downlink connector on the server motherboard and the uplink connector on the direct-attached hard disk backplane, and an on-board route between the uplink connector on the direct-attached hard disk backplane and the hard disk connector on the direct-attached hard disk backplane. The other end of the hard disk connector is provided with a hard disk interface, which may be correspondingly connected to the hard disks 0-n.

The conventional direct-attached hard disk backplane further includes a monitoring bus connected to an out-of-band management system of a server motherboard, so as to accept out-of-band monitoring on the direct-attached hard disk backplane and an operating state of the connected hard disk by the out-of-band management system. The conventional direct-attached hard disk backplane further includes a power connector, which is connected to a power system of the server motherboard and configured to convert a power supply provided by the server motherboard into various power supplies with standard voltages required on the direct-attached hard disk backplane.

On the conventional direct-attached hard disk backplane, limited by various hard disk forms, bandwidths, and rate types, the device layout and routing manner of each backplane are different and cannot be reused between each other, making it unable to achieve the universal design of the hard disk and difficult to realize reuse cross generations. Moreover, such high-density backplane shows heat dissipation performance. For a hard disk backplane with a high-density layout (a 12*2.5-inch hard disk configuration), the overall power consumption is relatively high. Additionally, a vertical backplane layout is commonly adopted, which is perpendicular to an airflow direction, resulting in a low aperture ratio of the hard disk backplane, thus posing significant challenges for improving the heat dissipation performance. In order to ensure heat dissipation, it is possible to avoid mounting the hard disks in all hard disk slots, so as to prevent the hard disks from blocking heat dissipation holes in the direct-attached hard disk backplane. As introduced hereinabove, since the high-speed signal of the server motherboard source end needs to access to the hard disk connector side by passing through a backplane board layer, when the hard disk needs to support a higher rate, the material and number of layers of a Printed Circuit Board (PCB) used by the direct-attached hard disk backplane also increase. Moreover, if an area of the direct-attached hard disk backplane is larger, the cost is higher, leading to a sharp increase in the cost of the direct-attached hard disk backplane as the hard disk rate and the number of hard disks increase. The long high-speed signal link between the central processing unit of the server motherboard and the hard disk not only increases the cost of the direct-attached hard disk backplane, but also easily leads to incomplete consistency of the high-speed signal links of different hard disks, thereby increasing the difficulty of impedance design.

To sum up, the conventional direct-attached hard disk backplane constituted by a single integrated board has many disadvantages of being high in cost, poor in heat dissipation, difficult in design, low in reuse rate, etc.

In order to optimize the design of the direct-attached hard disk backplane structure, the design solution of the direct-attached hard disk system provided in the embodiments of the present invention no longer adopts the conventional design solution of the direct-attached hard disk backplanes, but provides a hard disk sub-board and a backplane board card, which are detachably connected. A high-speed signal of the central processing unit of the server motherboard is directly interconnected with the hard disk connector via the hard disk sub-board and then transmitted to the hard disk, while the hard disk state signal (low-speed signal) and power signal on the conventional direct-attached hard disk backplane are interconnected with the hard disk sub-board via the backplane board card provided in the embodiments of the present invention, achieving a decoupling design of the three signals. In the embodiments of the present invention, the hard disk sub-board includes the hard disk connector and a first hard disk state signal connector. The hard disk sub-board is detachably connected to the backplane board card via the first hard disk state signal connector. An uplink data interface of the hard disk connector is directly connected to a downlink connector of the server motherboard via a high-speed signal line, and a downlink data interface of the hard disk connector is connected to the hard disk. A hard disk state signal and a power signal of the hard disk connector are connected to a backplane controller of the backplane board card via the first hard disk state signal connector. Compared to the conventional direct-attached hard disk backplane, as a server storage architecture iteratively updates, the backplane board card may serve as a universal structure for cross-generation reuse, and the corresponding hard disk sub-board needs to be added according to a number of the hard disk and a type of the hard disk, such that a highly-reusable direct-attached hard disk solution is realized, original on-board routes between the hard disk and the server motherboard and passing through the hard disk backplane are reduced, and the high-speed signal line is shortened, facilitating a reduction in impedance design difficulty. Moreover, heat dissipation design is facilitated, and in particular, excellent ventilation performance is provided for high-density hard disk backplane scenarios, and overall noise and power consumption are reduced.

On the basis of the architecture hereinabove, the direct-attached hard disk system provided in the embodiments of the present invention is described below with reference to the drawings.

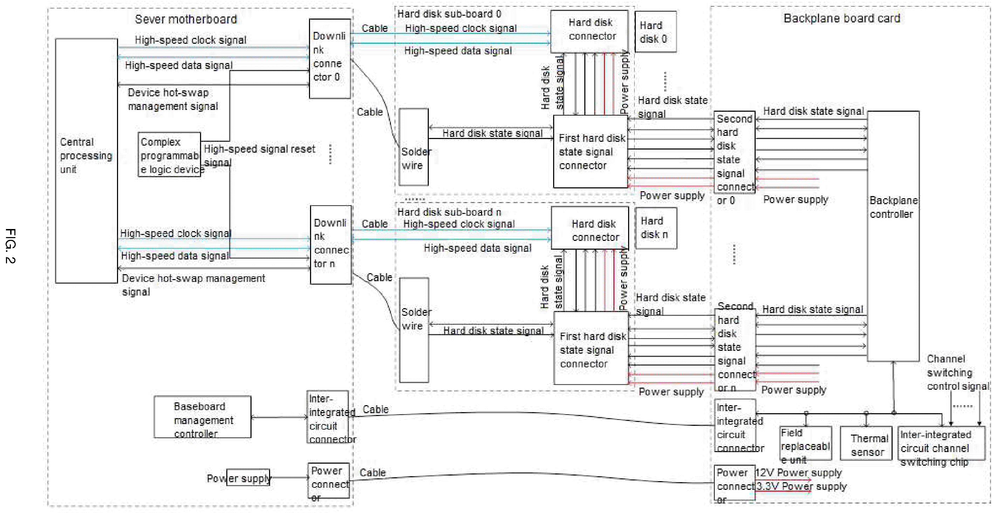

FIG. 2 is a schematic structural diagram of a direct-attached hard disk system according to embodiments of the present invention.

As shown in FIG. 2, the direct-attached hard disk system provided in the embodiments of the present invention includes a hard disk sub-board and a backplane board card. The hard disk sub-board includes a hard disk connector and a first hard disk state signal connector; and the hard disk sub-board is detachably connected to the backplane board card via the first hard disk state signal connector. An uplink data interface of the hard disk connector is directly connected to a downlink connector of a server motherboard via a high-speed signal line, and a downlink data interface of the hard disk connector is configured to connect to a hard disk; and a hard disk state signal and a power signal of the hard disk connector are connected to a backplane controller of the backplane board card via the first hard disk state signal connector.

In the embodiments of the present invention, a plurality of reusable hard disk sub-boards are provided, the direct-attached hard disk system provided in the embodiments of the present invention is composed of the plurality of reusable hard disk sub-boards and one backplane board card. After the direct-attached hard disk system provided in the embodiments of the present invention is arranged in a server, a server motherboard is interconnected with the hard disk sub-board, and the hard disk sub-board is further interconnected with the hard disk and the backplane board card, respectively.

In some embodiments of the present invention, the hard disk sub-board may be constituted by the hard disk connector, the first hard disk state signal connector, and a printed circuit board configured to mount the hard disk connector and the first hard disk state signal connector.

In some other embodiments of the embodiments of the present invention, since the connection required by the hard disk connector and the first hard disk state signal connector on the hard disk sub-board provided in the embodiments of the present invention may be implemented by cables without on-board routing, the hard disk connector and the first hard disk state signal connector may also be detachably arranged on the backplane board card by other mounting manners.

In the direct-attached hard disk system provided in the embodiments of the present invention, for ease of mounting, the hard disk sub-boards may be arranged to be connected to the hard disk in a one-to-one correspondence. That is, one hard disk connector is arranged on one hard disk sub-board, wherein the hard disk connector is configured to connect to one hard disk. Then one first hard disk state signal connector is also arranged on the hard disk sub-board to transmit a hard disk state signal and a power signal related to the hard disk.

As shown in FIG. 2, the direct-attached hard disk system includes a total of n hard disk sub-boards, which are the hard disk sub-board 0 to the hard disk sub-board n, wherein the sides of the hard disk sub-boards are correspondingly connected to a downlink connector 0 to a downlink connector n on a server motherboard, and the other sides of the hard disk sub-boards are correspondingly connected to a second hard disk state signal connector 0 to a second hard disk state signal connector n on the backplane board card.

In the embodiments of the present invention, the hard disk connector is configured to transmit a signal between a central processing unit on the server motherboard and the hard disk. The signal between the hard disk and the server motherboard is usually a high-speed signal, and different high-speed signal lines are required according to different types of the hard disks.

For an uplink data interface side of the hard disk connector, in some embodiments of the present invention, the high-speed signal line may include a high-speed clock signal line and a high-speed data signal line. In the embodiment, for a Non Volatile Memory Host Controller Interface Specification (NVMHCIS or NVM Express, hereinafter referred to as NVMe) interface hard disk, the high-speed signal line adopted thereby is usually a peripheral component interconnect express (PCI-Express, PCI-Express or PCIe) bus. In the embodiment, the high-speed signal line between the hard disk connector and the server motherboard may include a peripheral component interconnect express bus data signal and a peripheral component interconnect express bus clock signal, as shown by blue cables in FIG. 2. The peripheral component interconnect express bus signal includes a peripheral component interconnect express bus read signal and a peripheral component interconnect express bus write signal. Then, for the hard disk sub-board 0, the peripheral component interconnect express bus data signal may be recorded as PCIE_S0_TX/RX, and the peripheral component interconnect express bus clock signal may be recorded as PCIE_S0_CLK... For the hard disk sub-board n, the peripheral component interconnect express bus signal may be recorded as PCIE_Sn_TX/RX (wherein TX represents sending and RX represents receiving), and the peripheral component interconnect express bus clock signal may be recorded as PCIE_Sn_CLK.

For the uplink data interface side of the hard disk connector, in some embodiments of the present invention, the high-speed signal line may only be the high-speed data signal line. In the embodiment, for a Serial Attached SCSI (hereinafter referred to as SAS)/Serial Advanced Technology Attachment (hereinafter referred to as SATA) interface hard disk, the high-speed signal line required only includes the high-speed data signal line and does not include the clock signal line.

In terms of a connection manner, as shown in FIG. 2, the uplink data interface of the hard disk connector may be connected to the downlink connector of the server motherboard via the high-speed signal cable, thereby further improving the mounting flexibility of the direct-attached hard disk system and the stability of the high-speed signal link.

For the downlink data interface side of the hard disk connector, the downlink data interface of the hard disk connector is designed according to the type of the hard disk to be connected. The interface of the hard disk is generally of a gold finger structure, and a pin is inserted in a position of a hard disk slot and then may be connected to a component on a server side (e.g., a data pin is connected to the central processing unit) via a circuit on the hard disk backplane. In the embodiments of the present invention, the hard disk connector may include a hard disk slot configured to connect to the hard disk.

According to a type of a communication interface, the type of the hard disk may be classified into an SAS interface hard disk or an SATA interface hard disk, and an NVMe interface hard disk. According to a type of a storage medium, the type of the hard disk may further be classified into a Hard Disk Drive (HDD) and a Solid State Disk or Solid State Drive (SSD). The Hard Disk Drive (HDD) is mainly an SAS interface or an SATA interface. The Solid State Disk or Solid State Drive (SSD) includes SAS interface, SATA interface, and NVMe interface hard disks. Then, the downlink data interface of the hard disk connector may be designed according to the type of the hard disk to be connected. When the type of the hard disk needs to be replaced, only the type of the hard disk connector of the hard disk sub-board needs to be changed. In the embodiment, when a hard disk sub-board is designed for an NVMe hard disk, a hard disk connector with a GENZ 1C/2C/4C hard disk interface may be selected. GENZ is a high-density and high-performance hard disk connector supporting a plurality of channel configurations, including 1C, 2C, 4C, and 4C+, wherein 1C represents a one channel configuration having 56 positions (pins), supporting a signal rate up to 56G PAM4, and being applicable to a plurality of applications, such as a server/storage device, high-performance computing, a switch, a router, etc.

In the embodiments of the present invention, the connectors configured to transmit low-speed signals interacting with the hard disk are recorded as a first hard disk state signal connector and a second hard disk state signal connector.

In some embodiments of the present invention, the first hard disk state signal connector may be connected to the second hard disk state signal connector of the backplane board card via a cable.

In some other embodiments of the present invention, the first hard disk state signal connector may also be connected to the second hard disk state signal connector of the backplane board card in an insertion manner. That is, one of the first hard disk state signal connector and the second hard disk state signal connector may adopt a male connector, and the other of the first hard disk state signal connector and the second hard disk state signal connector may adopt a female connector. In the embodiment, the first hard disk state signal connector may adopt a gold finger, and the second hard disk state signal connector may be correspondingly designed as a gold finger slot.

In order to ensure the stable operation of the hard disk, the first hard disk state signal connector is connected to the second hard disk state signal connector in an insertion manner, so as to fix the hard disk sub-board to the backplane board card, thereby fixing the hard disk in the direct-attached hard disk system.

In order to fix the hard disk sub-board to the backplane board card, the direct-attached hard disk system provided in the embodiments of the present invention may further include a limiting apparatus, which is fixedly arranged on the backplane board card and configured to fix the hard disk sub-board, the hard disk sub-board is provided with a snap-fit and a snap-fit loosening structure, and the limiting apparatus is provided with a limiting structure corresponding to the snap-fit and the snap-fit loosening structure. When the hard disk sub-board is arranged on the backplane board card, the first hard disk state signal connector is connected to the second hard disk state signal connector in an insertion manner, and then a snap-fit of the hard disk sub-board is locked with a limiting structure of the limiting apparatus, so as to firmly fix the hard disk sub-board on the backplane board card. When the hard disk sub-board needs to be disassembled, a locking state between the snap-fit of the hard disk sub-board and the limiting structure of the limiting apparatus is released by a snap-fit loosening structure, so as to conveniently disassembling the hard disk sub-board from the backplane board card.

For ease of heat dissipation, in the embodiments of the present invention, a high-speed signal link of the hard disk connector and a hard disk state signal line between the hard disk connector and the first hard disk state signal connector may be arranged at 90°.

In the embodiments of the present invention, the first hard disk state signal connector and the second hard disk state signal connector are configured to transmit low-speed signals and power signals between the hard disk and the backplane controller, wherein the low-speed signals mainly refer to hard disk state signals between the hard disk and the backplane controller, such as sideband signals.

The sideband signals generally refer, in high-speed interconnection technologies such as PCIe, to signals that do not belong to standard protocol-specified transmission but have specific significance for devices connected. These signals may include, but are not limited to, a power management signal, a configuration signal, a state indication signal, etc., which are transmitted by dedicated pins. In the embodiments of the present invention, the hard disk state signal line of the hard disk connector may include a hard disk state indication signal line and a hard disk state control signal line.

The hard disk state indication signal line is configured to transmit a state signal output by the hard disk, which may include a hard disk presence signal. In order to distinguish the hard disk sub-board 0 to the hard disk sub-board n, the hard disk presence signals corresponding to the hard disk sub-boards may be recorded as S0_PRSNT_N to Sn_PRSNT_N.

The hard disk state control signal line is configured to transmit a control signal to the hard disk. In the embodiment, the hard disk state control signal line may be a hard disk state indicator lamp control signal line that is correspondingly arranged on a hard disk state indicator lamp of the hard disk sub-board. In order to distinguish the hard disk sub-board 0 to the hard disk sub-board n, the hard disk state indicator lamp control signals corresponding to the hard disk sub-boards may be recorded as S0_LED to Sn_LED.

In some embodiments of the present invention, in order to facilitate the monitoring of a hard disk state by an out-of-band management system of the server, a hard disk state control pin may further include an Inter-Integrated Circuit (I2C) pin. In order to distinguish the hard disk sub-board 0 to the hard disk sub-board n, the inter-integrated circuit pins of the hard disk connectors on the hard disk sub-boards may be recorded as S0_I2C to Sn_I2C.

In some embodiments of the present invention, in order to implement the management of the backplane controller to each hard disk, the hard disk state control pin may further include a reset pin, which is configured to reset the corresponding hard disk after the backplane controller receives the control signal. In order to distinguish the hard disk sub-board 0 to the hard disk sub-board n, the reset pins of the hard disk connectors on the hard disk sub-boards may be recorded as S0_RST_N to Sn_RST_N.

A power pin of the hard disk connector provides a power voltage required for transmitting the hard disk, and may include a +12V voltage (P12V) and a +3.3V standby power (+3.3V Standby, P3V3_STBY), as shown by red cables in FIG. 2.

In some embodiments of the present invention, the hard disk state signal may further include a device hot-swap management signal and a high-speed signal bus reset signal, such that the central processing unit of the server motherboard controls the hard disk state via the backplane controller. As shown in FIG. 2, the first hard disk state signal connector may further include a reset pin and a device hot-swap management pin, wherein the reset pin of the first hard disk state signal connector and the device hot-swap management pin of the first hard disk state signal connector may be connected to the downlink connector of the server motherboard. As shown by the hard disk state signal between the first hard disk state signal connector and a solder wire connector in FIG. 2, the reset pin and the device hot-swap management pin of the first hard disk state signal connector may be connected to the downlink connector of the server motherboard via the solder wire connector of the hard disk sub-board and cables.

A high-speed signal reset signal and a device hot-swap management signal corresponding to the reset pin and device hot-swap management pin of the first hard disk state signal connector may be, by passing through the downlink connector of the server motherboard, signals output by a Complex Programmable logic device (CPLD) of the server motherboard, wherein a host computer of the CPLD may be a central processing unit or a Baseboard Management Controller (BMC) of an out-of-band management system.

In the embodiments of the present invention, the backplane board card is a universal backplane design, and the hard disk connector and the hard disk high-speed signal line no longer need to be arranged thereon. In some embodiments of the present invention, the backplane board card may include the second hard disk state signal connector, the backplane controller, and a power connector, wherein the second hard disk state signal connector is configured to connect the first hard disk state signal connector to the backplane controller; the backplane controller is configured to perform tasks of universal backplane management (UBM), power management, and hard disk hot-swap support; and the power connector is configured to connect to a power supply of the server motherboard and convert the power supply into a power supply output required by the backplane board card.

In some other embodiments of the embodiments of the present invention, the backplane board card may include the second hard disk state signal connector, the backplane controller, an inter-integrated circuit connector, a Field Replaceable Unit (FRU), a thermal sensor, and the power connector, wherein the second hard disk state signal connector is configured to connect the first hard disk state signal connector to the backplane controller; the inter-integrated circuit connector is configured to connect the server motherboard to the backplane controller; the field replaceable unit and the thermal sensor are connected to the inter-integrated circuit connector; and the power connector is configured to connect to the power supply of the server motherboard and convert the power supply into the power supply output required by the backplane board card.

As described hereinabove, the signal between the first hard disk state signal connector and the hard disk connector mainly includes the sideband signal (recorded as the hard disk state signal in the embodiments of the present invention) and the power signal, wherein the sideband signal may include the hard disk presence signal, the hard disk state indicator lamp control signal, an inter-integrated circuit signal, and a reset signal. Additionally, the first hard disk state signal connector may further include the high-speed signal reset signal and the device hot-swap management signal of the complex programmable logic device connected to the server motherboard via the solder wire connector, the cable, and the downlink connector of the server motherboard. Correspondingly, the hard disk presence signal, the hard disk state indicator lamp control signal, the inter-integrated circuit signal, the reset signal, the high-speed signal reset signal, the device hot-swap management signal, and the power signal may be included between the second hard disk state signal connector and the first hard disk state signal connector. The hard disk state signal between the second hard disk state signal connector and the first hard disk state signal connector may be as shown by a black cable between the second hard disk state signal connector and the first hard disk state signal connector in FIG. 2. The power signal between the second hard disk state signal connector and the first hard disk state signal connector may include a +12V voltage (P12V) and a +3.3V standby power supply (+3.3V Standby, P3V3_STBY), as shown by a red cable between the second hard disk state signal connector and the first hard disk state signal connector in FIG. 2.

In the direct-attached hard disk system provided in the embodiments of the present invention, the backplane board card may further include an inter-integrated circuit channel switching chip (I2C Switch); a first end of the inter-integrated circuit channel switching chip is connected to a second end of the inter-integrated circuit connector; a first end of the inter-integrated circuit connector is connected to an out-of-band monitoring system of the server motherboard; and a second end of the inter-integrated circuit channel switching chip is connected to the first hard disk state signal connectors of the plurality of corresponding hard disk sub-boards via the plurality of the second hard disk state signal connectors.

As shown in FIG. 2, the inter-integrated circuit channel switching chip is controlled by a channel switching control signal to switch an inter-integrated circuit of the out-of-band management system of the server motherboard to connect to different hard disk sub-boards, so as to read the state of the hard disks connected to the hard disk sub-boards, thereby achieving out-of-band monitoring of the hard disks. The channel switching control signals (S0_I2C-Sn_I2C) may be sent by the backplane controller or the out-of-band management system of the server motherboard.

In some embodiments of the present invention, the field replaceable unit and the thermal sensor on the backplane board card both may also be arranged on the inter-integrated circuit of the backplane board card of the out-of-band management system of the server motherboard via the inter-integrated circuit connector of the backplane board card, so as to achieve the functions of the out-of-band management system of the server motherboard for asset information management of the backplane board, operating temperature monitoring, etc.

In some embodiments of the present invention, the out-of-band management system of the server motherboard may include a baseboard management controller. As shown in FIG. 2, the baseboard management controller of the server motherboard may be connected to the inter-integrated circuit connector of the server motherboard via a System Management Bus (SMBus), and communicates with the inter-integrated circuit channel of the backplane board card via the inter-integrated circuit connector of the server motherboard, the cable, and the inter-integrated circuit connector of the backplane board card, thereby achieving the monitoring of an operating state of the backplane board card and further achieving the monitoring of an operating state of each hard disk sub-board and even each hard disk via the backplane board card.

In some other embodiments of the present invention, in order to relieve pin pressure of the baseboard management controller, a first end of the inter-integrated circuit connector of the backplane board card may also be connected to the baseboard management controller of the server motherboard via the complex programmable logic device of the server motherboard.

In some embodiments of the present invention, the server motherboard supplies power to the power connector of the backplane board card. The power connector supplies power with various voltage standards to chips such as the backplane controller of the backplane board card, and supplies power to the hard disk connector on each hard disk sub-board via the second hard disk state signal connector and the first hard disk state signal connector.

In the direct-attached hard disk system provided in the embodiments of the present invention, by designing the hard disk sub-board and a backplane board card, which are detachably connected, the hard disk sub-board includes the hard disk connector and a first hard disk state signal connector. The hard disk sub-board is detachably connected to the backplane board card via the first hard disk state signal connector. An uplink data interface of the hard disk connector is directly connected to a downlink connector of the server motherboard via a high-speed signal line, and a downlink data interface of the hard disk connector is connected to the hard disk. A hard disk state signal and a power signal of the hard disk connector are connected to a backplane controller of the backplane board card via the first hard disk state signal connector. Compared to the conventional direct-attached hard disk backplane, as a server storage architecture iteratively updates, the backplane board card may serve as a universal structure for cross-generation reuse, and the corresponding hard disk sub-board needs to be added according to the number and type of the hard disks, such that a highly-reusable direct-attached hard disk solution is realized, original on-board routes between the hard disk and the server motherboard and passing through the hard disk backplane are reduced, and the high-speed signal line is shortened, facilitating a reduction in impedance design difficulty. Moreover, heat dissipation design is facilitated, and in particular, excellent ventilation performance is provided for high-density hard disk backplane scenarios, and overall noise and power consumption are reduced.

Moreover, by comparing FIG. 2 of the embodiments of the present invention with the conventional direct-attached hard disk backplane introduced in FIG. 1, it may be clearly seen that, on the direct-attached path between the central processing unit of the server motherboard and the hard disk, the on-board routes between the hard disk and the server motherboard and passing through the backplane are reduced, thereby shortening the high-speed signal link and facilitating a reduction in the difficulty of impedance design. Since the backplane board card only needs to be configured with the low-speed signal and the power signal, the high-speed signal does not need to be configured, and design costs are significantly reduced, while the high-speed signal between the central processing unit of the server motherboard and the hard disk may be transmitted via the cable, facilitating achievement of the consistency of the high-speed signal links of the hard disks, thereby reducing the difficulty of impedance design.

On the basis of the embodiments hereinabove, the embodiments of the present invention continue to describe the mounting structure of the direct-attached hard disk system.

By adopting the direct-attached hard disk system design solution provided in the embodiments hereinabove of the present invention, the direct-attached hard disk system is no longer limited to being configured as a single integrated board like the conventional direct-attached hard disk backplane, but may flexibly combine the connection manner and mounting manner between the hard disk sub-board and the backplane board card, so as to provide greater flexibility for the layout within the server chassis.

In some embodiments of the present invention, the hard disk sub-board may be horizontally arranged on the backplane board card, and the assembled direct-attached hard disk system occupies a larger planar space.

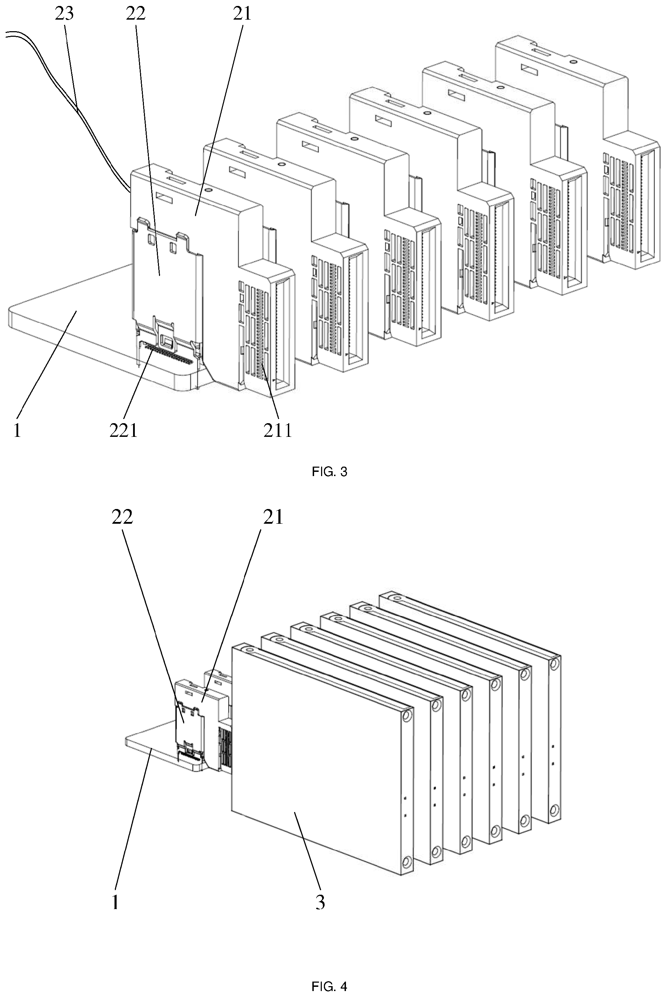

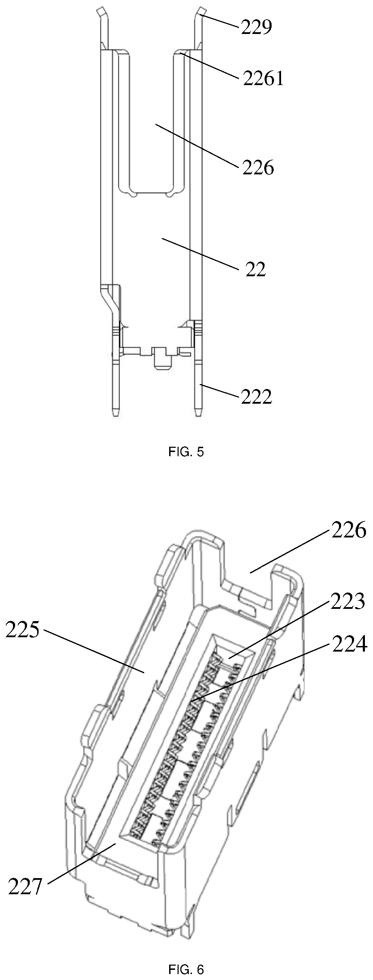

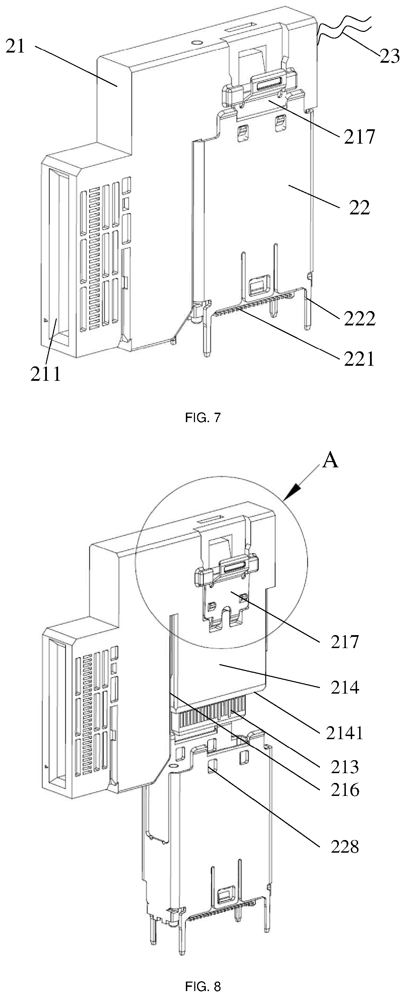

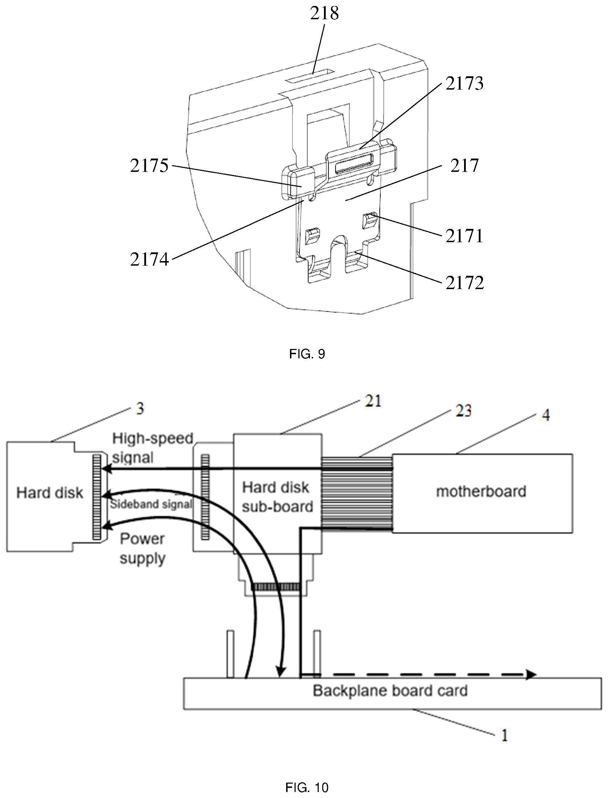

FIG. 3 is a schematic diagram of an assembly structure of a direct-attached hard disk system according to the embodiments of the present invention. FIG. 4 is a schematic diagram of a mounting structure of a direct-attached hard disk system and a hard disk according to the embodiments of the present invention. FIG. 5 is a side view of a mounting slot according to the embodiments of the present invention. FIG. 6 is a schematic structural diagram of the mounting slot from another perspective view according to the embodiments of the present invention. FIG. 7 is a schematic diagram of a mounting structure of a hard disk sub-board and a mounting slot according to the embodiments of the present invention. FIG. 8 is a schematic diagram of a three-dimensional structure of a hard disk sub-board separated from a mounting slot according to the embodiments of the present invention. FIG. 9 is an enlarged schematic structural diagram of part A in the hard disk sub-board shown in FIG. 8.

In some other embodiments of the present invention, in order to fully utilize a three-dimensional space, as shown in FIG. 3, in the direct-attached hard disk system provided in the embodiments of the present invention, the hard disk sub-board 21 may be vertically arranged on the backplane board card 1. In the embodiment, the downlink data interface, which is a hard disk slot 211, of the hard disk connector on the hard disk sub-board 21 may be provided at a position of the hard disk sub-board 21 other than the end connected to the backplane board card 1. In the embodiments of the present invention, the hard disk slot 211 may be located at the top of the hard disk sub-board 21 or at one side of the hard disk sub-board 21. FIG. 4 shows an embodiment of the present invention where the hard disk slot 211 is provided in one side of a hard disk sub-board 21, that is, a plurality of hard disk sub-boards 21 are provided, the plurality of hard disk sub-boards 21 may be vertically arranged in juxtaposition on the backplane board card 1, and the hard disks are correspondingly inserted into the hard disk slots 211 of the hard disk sub-boards 21 on a one-to-one basis. The mounting structure of the assembled direct-attached hard disk system and the hard disk 3 may fully utilize the three-dimensional space in the chassis. A left-right direction of the hard disk sub-board 21 may be parallel to an airflow direction in a heat dissipation channel to reduce the impact of the hard disk slot 211 and a cable end 23 on airflow, thereby ensuring a heat dissipation effect. Meanwhile, the hard disk slot 211 may be suspended on a side portion of the backplane board card 1, such that interference between the hard disk 3 and the backplane board card 1 during the mounting of the hard disk 3 may be avoided. In the embodiment, a bottom height of the hard disk 3 may be lower than the height of the position at which the backplane board card 1 is located, making the utilization of the chassis space more flexible, that is, the mounting position of the hard disk 3 may not be affected by the position of the backplane board card 1.

As shown in FIG. 3 and FIG. 4, the uplink data interface of the hard disk connector on the hard disk sub-board 21 may be provided on an opposite side of the hard disk slot 211 on the hard disk sub-board 21, and the cable 23 is configured to connect the uplink data interface of the hard disk connector to the downlink connector 401 of the server motherboard 4.

In order to facilitate mounting and dismantling between the hard disk sub-board 21 and the backplane board card 1, the direct-attached hard disk system provided in the embodiments of the present invention may further include a mounting slot 22. As shown in FIG. 3, the mounting slot 22 may be vertically arranged on the backplane board card 1 and provide a slot for mounting the hard disk sub-board 21.

The hard disk sub-board 21 and the mounting slot 22 may be connected in an insertion manner or via other structural members. By providing the mounting slot 22 to mount the hard disk sub-board 21 on the backplane board card 1, on the basis of being able to stably mount the hard disk sub-board 21 on the backplane board card 1, the flexibility brought by the cable 23 for connecting the hard disk sub-board 21 to the server motherboard 4 may be fully utilized. Therefore, the hard disk slot 211 is provided at one end of the hard disk sub-board 21 to connect to the hard disk 3, and the other end of the hard disk sub-board 21 is connected to the server motherboard 4 via the cable 23, facilitating the mounting and dismantling of the hard disk 3 and the connection of the cable 23. The mounting structure combining the hard disk sub-board 21 with the mounting slot 22 may ensure the connection stability between the hard disk and components on the hard disk sub-board 21. Moreover, the detachable connection between the hard disk sub-board 21 and the mounting slot 22 allows a user to conveniently select the required hard disk sub-board 21 according to requirements, so as to adapt to different types of hard disks 3.

In some embodiments of the present invention, as shown in FIG. 5 and FIG. 6, an insertion pin 222 may be provided at a bottom of the mounting slot 22, and a positioning hole may be provided in the backplane board card 1, so as to cause the insertion pin 222 of the mounting slot 22 to correspond to the position of the positioning hole on a one-to-one basis, such that the mounting slot 22 may be arranged on the backplane board card 1 by fixedly connecting the insertion pin 222 to the positioning hole. A cross section of the mounting slot 22 may be rectangular. The stability of the connection between the mounting slot 22 and the backplane board card 1 may be ensured by arranging the insertion pins 222 at four corners at the bottom of the mounting slot 22.

If the first hard disk state signal connector of the hard disk sub-board 21 is a gold finger 213, as shown in FIG. 6, a gold finger slot 223 corresponding to the gold finger 213 may be provided at the bottom of the mounting slot 22. As shown in FIG. 7, a signal connection end 221 connected to a signal terminal 224 of the gold finger slot 223 may be arranged at the bottom of the mounting slot 22. The signal connection end 221 is configured to connect to the second hard disk state signal connector of the backplane board card 1, such that the signal connection between the first hard disk state signal connector and the second hard disk state signal connector is achieved via the first hard disk state signal connector (the gold finger 213) of the hard disk sub-board 21, the signal terminal 224 of the gold finger slot 223 of the mounting slot 22, the signal connection end 221 of the mounting slot 22, and the second hard disk state signal connector of the backplane board card 1, thereby achieving a signal connection between the hard disk 3 and a route on the backplane board card 1.

Certainly, the structure of the mounting slot 22 and the connection relationship between the first hard disk state signal connector and the second hard disk state signal connector implemented via the mounting slot 22 may also be selected in other manners. In the embodiment, the mounting slot 22 may be directly soldered onto the backplane board card 1, or the mounting slot 22 may be fixed with the backplane board card 1 by other structural members.

As shown in FIG. 8, in order to facilitate assembly between the hard disk sub-board 21 and the mounting slot 22, an insertion component 214 configured to be arranged in the mounting slot 22 may be arranged on the side of the hard disk sub-board 21 facing away from the hard disk slot 211. The first hard disk state signal connector (the golden finger 213) of the hard disk sub-board 21 is located at a bottom of the insertion component 214. Correspondingly, an insertion cavity 225 for the insertion component 214 to be inserted into is provided at a top of the mounting slot 22, and the gold finger slot 223 in the mounting slot 22 is located in the insertion cavity 225, such that when the insertion component 214 of the hard disk sub-board 21 is inserted into the insertion cavity 225 of the mounting slot 22, the insertion component 214 drives the gold finger 213 to move to cooperate with the gold finger slot 223 in the insertion cavity 225, thereby achieving a connection between the golden finger 213 and the signal terminal 224 on the golden finger slot 223.

In some embodiments of the present invention, the bottom height of the insertion component 214 is higher than the bottom height of the side of the hard disk sub-board 21 close to the hard disk slot 211, that is, a height difference is formed between the bottom of the insertion component 214 and the bottom of the side of the hard disk sub-board 21 close to the hard disk slot 211, thereby providing an avoidance space for the mounting slot 22. Such arrangement is to reduce the overall height of the direct-attached hard disk system after mounting, so as to reduce the space required to be occupied by the direct-attached hard disk system. After the mounting slot 22, the insertion component 214 of the hard disk sub-board 21, and the backplane board card 1 are assembled, the bottom height of the side of the hard disk sub-board 21 close to the hard disk slot 211 is lower than a surface of the backplane board card 1. In the embodiments of the present invention, the hard disk sub-board 21 may be of an inverted L-shaped structure, an avoidance space is formed between the two sides of the hard disk sub-board 21, and one side of the mounting slot 22 is located in the avoidance space to cause the structural layout to be more compact, thereby further saving space.

In some embodiments of the present invention, guiding steps may be provided on two sides of the insertion component 214, guiding sliding grooves 226 are provided on two side walls of the mounting slot 22, and the guiding steps match the shapes of the guiding sliding grooves 226 to allow the guiding steps to slide along the guiding sliding grooves 226. In the embodiments of the present invention, through the cooperative sliding of the guiding steps and the guiding sliding grooves 226, when the insertion component 214 is inserted into the insertion cavity 225 of the mounting slot 22, the guiding sliding grooves 226 may provide tracks for the guiding steps, thereby ensuring the positional accuracy of the insertion component 214 and improving mounting efficiency and accuracy.

In some embodiments of the present invention, a first guiding step and a second guiding step are respectively arranged on two sides of the insertion component 214, and are respectively located on the left and right sides of the insertion component 214. A left-right direction of the insertion component 214 is consistent with that of the hard disk sub-board 21. A first guiding sliding groove 226 and a second guiding sliding groove 226 are respectively provided on two side walls of the mounting slot 22. The first guiding sliding groove 226 and the second guiding sliding groove 226 are arranged on the left and right sides of the mounting slot 22. A left-right direction of the mounting slot 22 is also consistent with the left-right direction of the hard disk sub-board 21. Moreover, the first guiding sliding groove 226 and the second guiding sliding groove 226 have different slot widths, the first guiding step is cooperatively connected to the first guiding sliding groove 226, and the second guiding step matches the second guiding sliding groove 226, that is, the first guiding step and the second guiding step have different thicknesses in a front-rear direction of the insertion component 214, and the front-rear direction of the insertion component 214 refers to a direction perpendicular to the airflow direction and parallel to the backplane board card 1. The arrangement hereinabove may achieve a fool-proofing function on the mounting position of the insertion component 214 or the mounting slot 22.

In some embodiments of the present invention, avoidance grooves 216 may be provided on the two sides of the insertion component 214, and the guiding steps protrude from the insertion component 214 into the avoidance grooves 216. That is to say, the left and right sides of the insertion component 214 are not only provided with the guiding steps, but also spaced apart from the side structure of the hard disk sub-board 21 close to the hard disk slot 211. Such arrangement is to separate the insertion component 214 into an insertion member, facilitating assembly with the mounting slot 22. In the embodiment, a height of the guiding step along a mounting direction of the hard disk sub-board 21 is lower than the height of the avoidance groove 216 along a mounting direction of the hard disk sub-board 21. That is to say, when the insertion component 214 moves toward the mounting slot 22, the avoidance groove 216 first cooperates with the guiding sliding groove 226, and then as the insertion component 214 continues to be pushed, the guiding step enters the guiding sliding groove 226 and slides along the guiding sliding groove 226. Through the arrangement hereinabove, after the assembly of the insertion component 214 and the mounting slot 22 is completed, a bottom position of the guiding sliding groove 226 on the mounting slot 22 enters the avoidance groove 216, so as to further enhance the limitation of the mounting slot 22 and the hard disk sub-board 21 in the left and right direction. In the embodiments of the present invention, a groove width of the guiding sliding groove 226 is less than the widths of two side walls of the mounting slot 22, the guiding sliding groove 226 forms limiting edges 2174 on both sides, and the limiting edges 2174 cooperate with the side portions of the insertion component 214 to achieve limitation.

In some embodiments of the present invention, an importing arc portion may be provided on the end of the guiding step close to the mounting slot 22, and arc chamfers 2261 are provided on two side of the end of the guiding sliding groove 226 close to the guiding step. The arc chamfers 2261 are configured to guide the importing arc portion when the guiding step moves toward the guiding sliding groove 226, ensuring that the insertion component 214 may be smoothly mounted into the mounting slot 22, thereby improving assembly efficiency.

In some embodiments of the embodiments of the present invention, as shown in FIG. 8, a wire end stop surface 2141 may be provided at the bottom of the insertion component 214, and the gold finger 213 protrudes from the wire end stop surface 2141, that is, a boss on which the gold finger 213 is located is located on the wire end stop surface 2141. A board end stop surface 227 is provided inside the mounting slot 22, and the gold finger slot 223 is provided in the board end stop surface 227. When the wire end stop surface 2141 is attached to the board end stop surface 227, and the signal terminal 224 is connected to the gold finger 213. By providing the wire end stop surface 2141 and the board end stop surface 227, movement limit positions of the insertion component 214 and mounting slot 22 may be limited, avoiding an excessive insertion size of the insertion component 214 into the mounting slot 22, thus leading to damages to the gold finger 213 or the signal terminal 224.

As disclosed in the embodiments hereinabove of the present invention, the direct-attached hard disk system provided in the embodiments of the present invention may further include a limiting apparatus, which is fixedly arranged on the backplane board card 1 and configured to fix the hard disk sub-board 21, the hard disk sub-board 21 is provided with a snap-fit and a snap-fit loosening structure, and the limiting apparatus is provided with a limiting structure corresponding to the snap-fit and the snap-fit loosening structure. In some embodiments of the present invention, the snap-fit may be an elastic component 217 arranged on one of the hard disk sub-board 21 and the mounting slot 22, and the limiting structure may be a lock catch 228 arranged on the other one of the hard disk sub-board and the mounting slot. The elastic component 217 is provided with a locking portion 2171 cooperating with the lock catch 228. In the embodiments of the present invention, by utilizing the arrangement of the elastic component 217, when the hard disk sub-board 21 and the mounting slot 22 are assembled, the elastic component 217 undergoes elastic deformation until the locking portion 2171 on the elastic component 217 cooperates with the lock catch 228. The assembly in the manner of the elastic component 217 and the lock catch 228 has high disassembly and assembly efficiency, and convenient mounting is achieved. As shown in FIG. 8 and FIG. 9, the lock catch 228 may be arranged on the mounting slot 22, the lock catch 228 may be a lock hole, the locking portion 2171 may be a locking boss, and the lock hole has a size matching the locking protrusion.

The snap-fit loosening structure disclosed in the embodiments hereinabove is configured to drive the snap-fit to move so as to unlock the snap-fit and the limiting structure, and the snap-fit loosening structure may be an unlocking component that is configured to drive the elastic component 217 to move so as to unlock the lock catch 228 and the locking portion 2171. The unlocking component may be arranged on the hard disk sub-board 21 and connected to the elastic component 217. By providing the unlocking component connected to the elastic component 217 and utilizing a driving effect of the unlocking component on the elastic component 217, the locking portion 2171 on the elastic component 217 is separated from the lock catch 228 to complete unlocking. The unlocking component is provided to be applicable to situations where the mounting space is small and manual unlocking is not feasible. For ease of unlocking, the elastic component 217 and the unlocking component both are arranged on the hard disk sub-board 21. Certainly, when space permits, the elastic component 217 may also be manually driven to achieve unlocking.

In some embodiments of the present invention, the elastic component 217 may be an elastic piece, wherein one end of the elastic component 217 is located on the hard disk sub-board 21, and the other end of the elastic component 217 is connected to the unlocking component. In the embodiments of the present invention, the elastic component 217 is arranged on a front side or a rear side of the hard disk sub-board 21, the hard disk sub-board 21 is arranged at the bottom of the elastic component 217, and a deformation space is reserved between the top of the elastic component 217 and the hard disk sub-board 21. When the hard disk sub-board 21 moves toward the mounting slot 22, the elastic component 217 moves toward the direction close to the hard disk sub-board 21 and enters the insertion cavity 225 of the hard disk sub-board 21. The elastic component 217 undergoes elastic deformation under the action of a front wall or rear wall of the hard disk sub-board 21. When the position of the locking portion 2171 moves to the position of the lock catch 228, the locking portion 2171 and the lock catch 228 are connected in a snap-fitted manner. In the embodiment, the elastic component 217 firmly restricts, under its own elastic force, the lock catch 228 on the locking portion 2171. In the embodiment, the hard disk sub-board 21 is just assembled with the mounting slot 22, that is, the gold finger 213 is just cooperatively connected to the signal terminal 224.

In some embodiments of the present invention, the unlocking component may be a pull strap (not shown in the figure), the hard disk sub-board 21 may further be provided with a pull strap channel 218, and the pull strap penetrates through the pull strap channel 218, bypasses a pull strap connection hole, and then penetrates back to the pull strap channel 218. The pull strap channel 218 is located at the top of the hard disk sub-board 21 and is provided close to the elastic component 217. In the embodiments of the present invention, the pull strap penetrates through the pull strap channel 218; one end of the pull strap is a pulling end, and the other end is a connection end; the pulling end of the pull strap is located at an upper portion of the hard disk sub-board 21, facilitating the manual pulling of the pull strap, and the connection end of the pull strap is connected to the elastic component 217; and the connection portion of the pull strap may be connected to the top of the elastic component 217. By pulling the pull strap, the elastic component 217 is driven to move toward the direction close to the hard disk sub-board 21, so as to drive the lock catch 228 to separate from the locking portion 2171, thereby completing the unlocking process of the elastic component 217.

In some embodiments of the present invention, as shown in FIG. 9, the pull strap connection hole may be provided at the top of the elastic component 217, and the pull strap passes through the pull strap connection hole and extendable to the side of the hard disk sub-board 21 facing away from the mounting slot 22, facilitating the manual pulling of the pull strap. The pull strap have certain hardness, such that convenient observation is realized from the pull strap channel 218, and the pull strap may be prevented from being attached to the hard disk sub-board 21, thereby facilitating a manual operation of the pull strap.

In some embodiments of the present invention, the lock catches 228 may be arranged on both front and rear sides of the mounting slot 22, that is, the mounting slot 22 may be of a symmetrical structure, which facilitates processing. A mounting direction between the mounting slot 22 and the backplane board card 1 may not be limited, thereby improving assembly efficiency.

In some embodiments of the present invention, a plurality of connecting legs 2172 may be arranged on the side of the elastic component 217 close to the mounting slot 22, in the embodiment, two connecting legs may be provided. The connecting legs 2172 are connected to the mounting slot 22, making deformation of the elastic piece easier, and facilitating assembly. The connecting legs 2172 are arc-shaped and located on the hard disk sub-board 21. By utilizing the connecting legs 2172 with an arc-shaped structure, a deformation space may be formed between the elastic component 217 and the hard disk sub-board 21. A middle portion of the side of the elastic component 217 facing away from the mounting slot 22 is connected to the unlocking component, that is, a pull strap connecting edge 2173 is provided at a middle position of the top of the elastic component 217. The pull strap connecting edge 2173 is provided with the pull strap connection hole. By providing the pull strap connection hole at the middle position of the top of the elastic component 217, the stability of the elastic component 217 during unlocking may be ensured. In the embodiments of the present invention, a plurality of locking portions 2171 and a plurality of lock catches 228 may be provided, such as two, thereby improving the reliability of the locking effect. Limiting edges 2174 are provided on two sides of the top of the elastic component 217. Limiting stopper 2175 cooperating with the limiting edges 2174 is also arranged on the hard disk sub-board 21. In the embodiments of the present invention, the limiting stopper 2175 is located outside the limiting edges 2174. The arrangement of the limiting stopper 2175 and the limiting edges 2174 may ensure that the deformation space between the elastic component 217 and the mounting slot 22 is not too large, which neither affects assembly of the hard disk sub-board 21 nor ensures firm locking between the hard disk sub-board 21 and the mounting slot 22. In the embodiments of the present invention, an importing slope is provided on the side of the locking portion 2171 close to the mounting slot 22, and the other side is provided with a locking plane. The lock catch 228 is connected to the locking plane in a snap-fitted manner, and the importing slope may guide the elastic deformation of the elastic component 217. In the embodiments of the present invention, in order to facilitate the driving of the elastic component 217 by the unlocking component, the pull strap connecting edge 2173 bends toward the side facing away from the hard disk sub-board 21, so as to increase a distance between the pull strap connecting edge 2173 and the hard disk sub-board 21. When the pull strap is pulled, the pull strap drives the pull strap connecting edge 2173 to move, so as to drive the elastic component 217 to move, thereby completing the unlocking of the elastic component 217 and the lock catch 228.

In some embodiments of the present invention, a board end guiding edge 229 may further be provided at the top of the mounting slot 22. The board end guiding edge 229 extends outward in an arc shape from an opening of the insertion cavity 225 of the mounting slot 22. When the insertion component 214 of the hard disk sub-board 21 moves toward the insertion cavity 225, the board end guiding edge 229 may achieve a guiding effect to ensure that the insertion component 214 is smoothly inserted into the insertion cavity 225.

In some embodiments of the present invention, the hard disk sub-board 21 may further provide an avoidance chamfer. The avoidance chamfer may avoid the mounting slot 22 on one hand and prevent interference with the backplane board card 1 on the other hand, such that the bottom of the side of the hard disk sub-board 21 provided with the hard disk slot 211 may be lower than the surface of the backplane board card 1, so as to reduce the height of the hard disk sub-board 21 in the direction perpendicular to the backplane board card 1, thereby saving space.

In the embodiments of the present invention, when the direct-attached hard disk system provided in the embodiments of the present invention needs to be mounted, the backplane board card 1 and the server motherboard 4 may first be mounted and connected, and then the mounting slot 22 is mounted. Alternatively, the mounting slot 22 may first be mounted on the backplane board card 1, and then the backplane board card 1 and the server motherboard 4 may be mounted and connected. When the mounting slot 22 is connected to the backplane board card 1, the insertion pin 222 of the mounting slot 22 is first inserted into the positioning hole, and then the positioning hole and the insertion pin 222 are soldered and fixed. The corresponding hard disk sub-board 21 is selected according to the type of the hard disk 3 to be assembled, and the insertion component 214 of the hard disk sub-board 21 is inserted into the insertion cavity 225 of the mounting slot 22, until the locking portion 2171 of the elastic component 217 cooperates with the lock catch 228 on the mounting slot 22. Then, the hard disk 3 is mounted in the hard disk slot 211 of the hard disk sub-board 21. When the hard disk sub-board 21 needs to be disassembled, the elastic component 217 may be driven to move by manually pulling the pull strap, the locking portion 2171 is separated from the lock catch 228, and in the embodiment, the hard disk sub-board 21 may be pulled out from the mounting slot 22 to complete the disassembly process.

FIG. 10 is a schematic diagram of a connection manner of a direct-attached hard disk system according to embodiments of the present invention.

As introduced in the embodiments hereinabove of the present invention, the hard disk sub-board 21 may be vertically mounted on the backplane board card 1 via the mounting slot 22. The first hard disk state signal connector may be designed in the form of the gold finger 213, and is connected to the second hard disk state signal connector on the backplane board card 1 via the signal terminal 224 of the gold finger slot 223 in the mounting slot 22.

As shown in FIG. 10, the direct-attached hard disk system provided in the embodiments of the present invention is utilized. When the direct-attached hard disk system is mounted, the mounting slot 22 is vertically mounted on the backplane board card 1, and the hard disk sub-board 21 is inserted into the gold finger slot 223 of the mounting slot 22 of the backplane board card 1 via the first hard disk state signal connector in the form of the gold fingers 213, so as to be connected to the second hard disk state signal connector on the backplane board card 1 via the signal terminal 224 in the gold finger slot 223. The hard disk is inserted into the hard disk slot 211 on the hard disk connector of the hard disk sub-board 21, and the other end of the hard disk connector is connected to the server motherboard 4 via the cable 23. A high-speed signal, a sideband signal, and a power supply may be transmitted to the hard disk 3 by the hard disk connector and the first hard disk state signal connector on the hard disk sub-board 21.

A high-speed signal link between the hard disk 3 and the server motherboard 4 is formed by the hard disk connector and the cable 23. The high-speed signal may include a peripheral component interconnect express bus data signal. A peripheral component interconnect express bus signal includes a peripheral component interconnect express bus read signal and a peripheral component interconnect express bus write signal. A high-speed clock signal may be a peripheral component interconnect express bus clock signal.

The sideband signal and the power supply are transmitted to the hard disk by the hard disk connector and the first hard disk state signal connector. The sideband signal may include a hard disk state indication signal and a hard disk state control signal. The hard disk state indication signal may be a hard disk presence signal. The hard disk state control signal may be a hard disk state indicator lamp control signal corresponding to a hard disk state indicator lamp arranged on the hard disk sub-board 21. The hard disk state control signal may further include a reset signal. The sideband signal may further include a device hot-swap management signal and a high-speed signal bus reset signal. The power supply may include a +12V voltage (P12V) and a +3.3V standby power supply (+3.3V Standby, P3V3_STBY).

The power supply provided to the hard disk by the backplane board card 1 is from the power supply of the server motherboard 4. The power supply of the server motherboard 4 supplies power to the backplane board card 1, is converted into a power supply voltage required by the hard disk 3 by the power connector on the backplane board card 1, and then provides same to the hard disk 3 via the second hard disk state signal connector of the backplane board card 1 and the first hard disk state signal connector of the hard disk sub-board 21.

In the embodiments of the present invention, the server motherboard 4 further interacts with the backplane controller on the backplane board card 1 via the solder wire connector and first hard disk state signal connector on the hard disk sub-board 21 and the second hard disk state signal connector of the backplane board card 1, thereby monitoring the state of the hard disk 3.

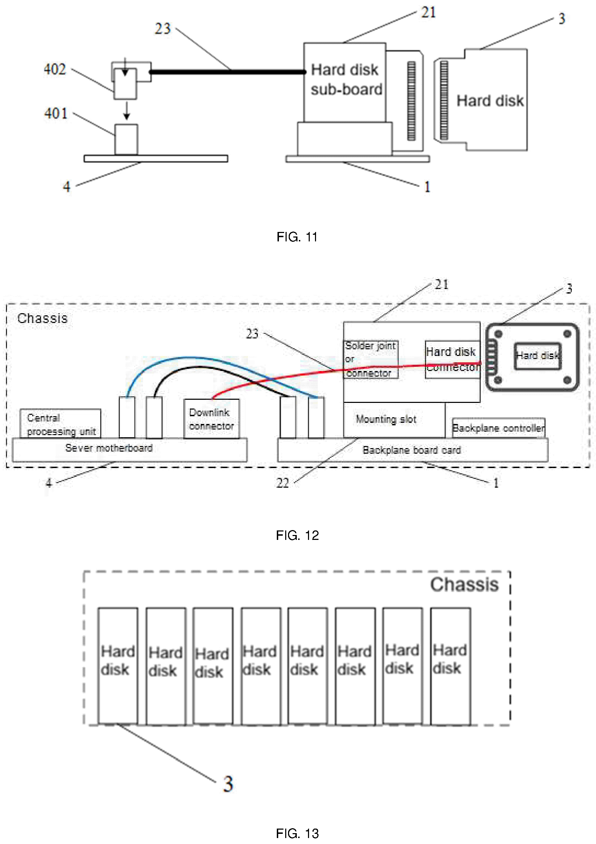

FIG. 11 is a schematic diagram of a connection manner of another direct-attached hard disk system according to embodiments of the present invention.

As shown in FIG. 11, the direct-attached hard disk system provided in the embodiments of the present invention is utilized. The hard disk may be inserted into the hard disk slot 211 of the hard disk connector on the hard disk sub-board 21, and then be connected to the downlink connector 401 of the server motherboard 4 via the cable 23 on the other end of the hard disk connector of the hard disk sub-board 21. That is, a cable connector 402 in FIG. 10 is inserted into the downlink connector 401 of the server motherboard 4, such that the transmission of the high-speed signal between the hard disk 3 and the central processing unit on the server motherboard 4 may be performed via the cable 23 and the hard disk connector.

By applying the direct-attached hard disk system provided in the embodiments of the present invention, a mounting manner of the direct-attached hard disk system may be flexibly designed according to the space in the server chassis.

FIG. 12 is a side view of a chassis when a backplane board card 1 is horizontally mounted according to embodiments of the present invention.

In some embodiments of the present invention, as shown in FIG. 12, the backplane board card 1 may be mounted horizontal to the server motherboard 4, and the hard disk sub-board 21 may be mounted vertically on the backplane board card 1.

As shown in FIG. 12, a red cable is the cable between the hard disk sub-board 21 and the downlink connector 401 of the server motherboard 4. Referring to the cable 23 shown in FIG. 3, the uplink data interface of the hard disk connector on the hard disk sub-board 21 and the cable led out from the solder wire connector may be encapsulated into a cable bundle to connect to the downlink connector 401 of the server motherboard 4, such that the hard disk sub-board 21 is connected to the server motherboard 4 via the encapsulated cable bundle.

A blue cable in FIG. 12 represents the cable between the power supply of the server motherboard 4 and the power connector of the backplane board card 1. A black cable in FIG. 12 represents the cable between the inter-integrated circuit connector of the server motherboard 4 and the inter-integrated circuit connector on the backplane board card 1.

FIG. 13 is a front view of a chassis when a backplane board card 1 is horizontally mounted according to embodiments of the present invention.

The solution shown in FIG. 12 that the hard disk sub-board 21 is mounted vertically on the backplane board card 1 and the backplane board card 1 is horizontal to the server motherboard 4 and mounted in the server chassis is applied. As shown in FIG. 13, a row of vertically-mounted hard disks 3 may be seen from a front window of the chassis.

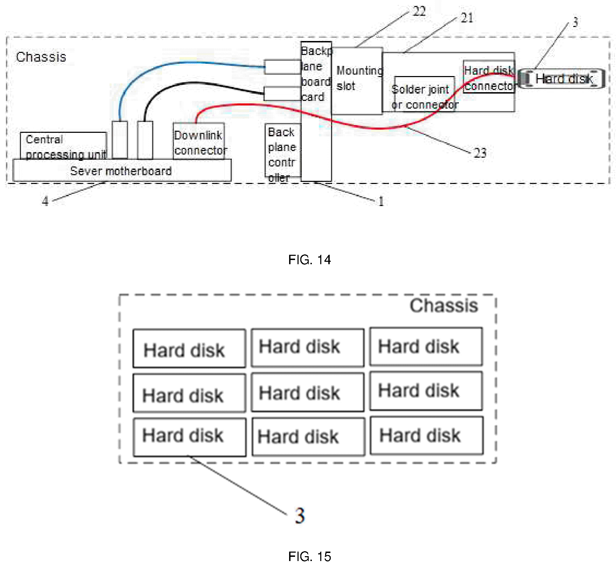

FIG. 14 is a side view of a chassis when a backplane board card 1 is vertically mounted according to embodiments of the present invention.

In some other embodiments of the present invention, as shown in FIG. 14, the backplane board card 1 may also be mounted vertical to the server motherboard 4, and the hard disk sub-board 21 is horizontal to the server motherboard 4 and mounted vertically on the backplane board card 1.

As shown in FIG. 14, a red cable is the cable between the hard disk sub-board 21 and the downlink connector 401 of the server motherboard 4. Referring to the cable 23 shown in FIG. 3, the uplink data interface of the hard disk connector on the hard disk sub-board 21 and the cable led out from the solder wire connector may be encapsulated into a cable bundle to connect to the downlink connector 401 of the server motherboard 4, such that the hard disk sub-board 21 is connected to the server motherboard 4 via the encapsulated cable bundle.

A blue cable in FIG. 14 represents the cable between the power supply of the server motherboard 4 and the power connector of the backplane board card 1. A black cable in FIG. 14 represents the cable between the inter-integrated circuit connector of the server motherboard 4 and the inter-integrated circuit connector on the backplane board card 1.

FIG. 15 is a front view of a chassis when a backplane board card 1 is vertically mounted according to embodiments of the present invention.

The solution shown in FIG. 14 that the hard disk sub-board 21 is arranged vertically on the backplane board card 1 and the backplane board card 1 is vertical to the server motherboard 4 and mounted in the server chassis is applied. As shown in FIG. 15, a plurality of rows of horizontally-mounted hard disks may be seen from the front window of the chassis.

Then, the mounting position of the direct-attached hard disk system provided in the embodiments of the present invention and the mounting positions of the hard disk sub-board 21, the backplane board card 1 and the hard disk on the direct-attached hard disk system provided in the embodiments of the present invention may be flexibly arranged according to the shape and free space of the server chassis.

In order to ensure mounting stability, in some embodiments of the present invention, the hard disk sub-boards 21 may be uniformly mounted on the backplane board card 1. As introduced in the embodiments hereinabove of the present invention, for ease of design and management, the hard disk sub-boards 21 are designed to be correspondingly connected to the hard disks 3 on a one-to-one basis, such that the number of hard disk sub-boards 21 to be mounted on the backplane board card 1 is determined by the number of hard disks 3 to be connected to the central processing unit of the server motherboard 4. According to the mounting manner of the hard disk sub-board 21 on the backplane board card 1, if the hard disk sub-board 21 is horizontally mounted along a long side of the backplane board card 1, a plurality of rows of hard disk sub-boards 21 may be mounted on the backplane board card 1, so as to increase the number of hard disk sub-boards 21, thereby mounting more hard disks 3.

On the basis of the embodiments hereinabove, the embodiments of the present invention continue to describe a control method based on the improved direct-attached hard disk system structure.

The direct-attached hard disk system provided in the embodiments of the present invention is applied. According to the records of the embodiments hereinabove of the present invention, the direct-attached hard disk system is mounted in the server chassis, and the hard disk is inserted into the hard disk connector of the hard disk sub-board of the direct-attached hard disk system. After the server is powered on, the direct-attached hard disk system is powered on, performs initialization on the connected hard disk, and completes a training action of the high-speed signal line via the high-speed signal link to accomplish actions of a physical layer and a link layer. After the central processing unit on the server motherboard recognizes the hard disk, an address space and a drive letter are allocated to the hard disk, such that read/write instructions and other tasks are performed under an Operating System (OS).

If the high-speed signal line between the hard disk connector and the server motherboard is a peripheral component interconnect express bus, the high-speed signal link between the hard disk and the server motherboard is established by initializing a transaction layer, a data link layer, and a physical layer.

The transaction layer is responsible for creating or parsing Transaction Layer Packets (TLPs), processing flow control, Quality of Service (QoS), transaction sorting, etc., and supporting four types of transactions: memory read/write, I/O read/write, and configuration read/write. The transaction layer is further responsible for managing virtual channels and flow categories, so as to support real-time, isochronous, and priority data transmission.

The data link layer is responsible for link management, including error detection, link state monitoring, flow control, and power management. The data link layer adds a sequence number and a Link CRC (LCRC) to the TLP generated by the transaction layer, so as to facilitate error detection and correction. In some embodiments of the present invention, the data link layer is also responsible for an ACK/NAK protocol to ensure successful transmission of a data packet.

The physical layer is configured to process actual physical transmission of data, including encoding and decoding of data, sending and receiving of signals, and link training and state management. The physical layer uses differential signal transmission, and adopts a specific encoding scheme (e.g., 8b/10b encoding or 128b/130b encoding) to ensure data integrity and link stability.

The PCIe bus uses an end-to-end connection manner, wherein a sending end and a receiving end both include sending logic (TX) and receiving logic (RX). A data path (Lane) of a physical link of the PCIe bus is composed of two sets of differential signals, with a total of 4 signal lines. A TX component of the sending end is connected, by using one set of differential signals, to an RX component of the receiving end; and the link is also referred to as a sending link of the sending end, and is also a receiving link of the receiving end. An RX component of the sending end is connected, by using another set of differential signals, to a TX component of the receiving end; and the link is also referred to as a receiving link of the sending end, and is also a sending link of the receiving end. One PCIe link may be composed of a plurality of Lanes.

The clock signal line in the PCIe bus is configured to ensure that the data is correctly transmitted in the PCIe link.

If the high-speed signal line between the hard disk connector and the server motherboard is an SAS/SATA signal line, an SAS protocol is adopted, and a layered structure includes the following.

Physical layer: the layer defines physical characteristics of SAS cables, connectors, and interfaces, including electrical characteristics and test conditions for SAS transceivers in an SAS PHY layer.

PHY layer: the layer is responsible for transmitting a bit stream of an upper-layer protocol, including an encoding solution, a power supply/reset sequence, etc. This layer processes an electrical signal.

Link layer: the layer controls connection management of the PHY layer, including error detection and correction, link initialization, rate matching, etc. The link layer is divided into a Serial SCSI Protocol (SSP) link layer, a Serial ATA Tunneled Protocol (STP) link layer, and a SCSI Management Protocol (SMP) link layer according to different protocols processed.

Port layer: the layer serves as an interface between the link layer and a transport layer, and is configured to process requests, interrupts, and connection establishment. The port layer is responsible for managing a communication between the SAS port and the PHY.

Transport layer: the layer is responsible for encapsulation and decomposition of SAS frames. The transport layer receives and parses the SAS frame from the port layer, then transmits data to an application layer, and simultaneously processes data from the application layer.

Application layer: the layer describes how to use SAS under different types of applications, generate requests and send same to the transport layer, and receive response results from the transport layer. The application layer includes an SCSI application layer, an ATA application layer, and a management application layer.

The SAS protocol adopts a serial communication manner and designs an efficient data transmission and clock synchronization mechanism, wherein data transmission and clock synchronization are implemented by the data line itself. The SAS uses a high-speed serial link, wherein each port includes one or more pairs of differential signal lines for sending and receiving, and these signal lines are responsible for transmitting data and clock information. Therefore, for a hard disk sub-card designed for SAS/SATA hard disks, only the high-speed data signal line may be arranged between the hard disk connector and the server motherboard, without disposing the high-speed clock signal line. By applying the direct-attached hard disk system provided in the embodiments of the present invention, the out-of-band monitoring of the operating state of the hard disk may be achieved by the out-of-band management system of the server. The baseboard management controller in the out-of-band management system may be connected to the inter-integrated circuit connector of the server motherboard via a system management bus, and communicates with the inter-integrated circuit channel of the backplane board card via the inter-integrated circuit connector of the server motherboard, the cable, and the inter-integrated circuit connector of the backplane board card, thereby achieving the monitoring of an operating state of the backplane board card and further achieving the monitoring of an operating state of each hard disk sub-board and even each hard disk via the backplane board card.

The baseboard management controller in the out-of-band management system monitors the operating states of the hard disk sub-boards and even the hard disks via the complex programmable logic device on the server motherboard, the inter-integrated circuit connector on the server motherboard, the inter-integrated circuit, and the inter-integrated circuit connector on the backplane board card.

When there are a plurality of hard disks to be monitored, the inter-integrated circuit connected to the baseboard management controller is switched to different devices connected to the inter-integrated circuit via the inter-integrated circuit channel switching chip on the backplane board card, so as to allow the baseboard management controller to access the state of the hard disk, the state of the backplane board card, etc. In the embodiment, a baseboard management controller may access, via an out-of-band management interface (e.g., the system management bus), whether the hard disk on the direct-attached hard disk system is present.

Under the control of the baseboard management controller, the backplane board card may receive a command from the central processing unit side on the server motherboard to control an on/off state and a lighting manner of the hard disk state indicator lamp.

On the basis of the embodiments hereinabove, the embodiments of the present invention further provide a hard disk sub-board. The hard disk sub-board may include:
a hard disk connector, wherein an uplink data interface of the hard disk connector is directly connected to a downlink connector of a server motherboard via a high-speed signal line, and a downlink data interface of the hard disk connector is configured to connect to a hard disk; and
a first hard disk state signal connector, connected to a backplane controller of a backplane board card and configured to transmit a hard disk state signal and a power signal.

The hard disk connector and the first hard disk state signal connector are designed separately, and the hard disk state signal of the hard disk connector is connected to the first hard disk state signal connector.

In some embodiments of the present invention, the hard disk sub-board may be constituted by a hard disk connector, a first hard disk state signal connector, and a printed circuit board configured to mount the hard disk connector and the first hard disk state signal connector.

In some other embodiments of the embodiments of the present invention, since the connection required by the hard disk connector and the first hard disk state signal connector on the hard disk sub-board provided in the embodiments of the present invention may be implemented by cables without on-board routing, the hard disk connector and the first hard disk state signal connector may also be detachably mounted on the backplane board card by other mounting manners.

The hard disk sub-board may be connected to the hard disk in a one-to-one correspondence. That is, one hard disk connector is arranged on one hard disk sub-board, wherein the hard disk connector is configured to connect to one hard disk. Then one first hard disk state signal connector is also arranged on the hard disk sub-board to transmit a hard disk state signal and a power signal related to the hard disk.

In the embodiments of the present invention, the hard disk connector is configured to transmit a signal between a central processing unit on the server motherboard and the hard disk. The signal between the hard disk and the server motherboard is usually a high-speed signal, and different high-speed signal lines are required according to different types of the hard disks.

For an uplink data interface side of the hard disk connector, in some embodiments of the present invention, the high-speed signal line may include a high-speed clock signal line and a high-speed data signal line. In the embodiment, for an NVMe hard disk, the high-speed signal line adopted between the hard disk connector and the server motherboard may include a peripheral component interconnect express bus data signal and a peripheral component interconnect express bus clock signal.

In some other embodiments of the embodiments of the present invention, the high-speed signal line may only be the high-speed data signal line. In the embodiment, for an SAS/SATA hard disk, the required high-speed signal line includes only the high-speed data signal line and does not include the clock signal line.

In terms of a connection manner, the uplink data interface of the hard disk connector may be connected to the downlink connector of the server motherboard via the high-speed signal cable, thereby further improving the mounting flexibility of the direct-attached hard disk system and the stability of the high-speed signal link.

For the downlink data interface side of the hard disk connector, the downlink data interface of the hard disk connector is designed according to the type of the hard disk to be connected. The interface of the hard disk is generally of a gold finger structure, and a pin is inserted in a position of a hard disk slot and then may be connected to a component on a server side (e.g., a data pin is connected to the central processing unit) via a circuit on the hard disk backplane. In the embodiments of the present invention, the hard disk connector may include a hard disk slot configured to connect to the hard disk.

In the embodiments of the present invention, the first hard disk state signal connector of the hard disk sub-board is connected to the second hard disk state signal connector of the backplane board card, so as to transmit the hard disk state signal and the power signal.

In some embodiments of the present invention, the first hard disk state signal connector may be connected, using a cable, to the second hard disk state signal connector of the backplane board card.

In some other embodiments of the present invention, the first hard disk state signal connector may also be connected to the second hard disk state signal connector of the backplane board card in an insertion manner. That is, one of the first hard disk state signal connector and the second hard disk state signal connector may adopt a male connector, and the other may adopt a female connector. In the embodiment, the first hard disk state signal connector may adopt a gold finger, and the second hard disk state signal connector may be correspondingly designed as a gold finger slot.

In order to ensure the stable operation of the hard disk, the first hard disk state signal connector is connected to the second hard disk state signal connector in an insertion manner, so as to fix the hard disk sub-board to the backplane board card, thereby fixing the hard disk in the direct-attached hard disk system.

For ease of heat dissipation, in the embodiments of the present invention, a high-speed signal link of the hard disk connector and the hard disk state signal line between the hard disk connector and the first hard disk state signal connector may be arranged at 90°.

Since the hard disk sub-board provided in the embodiments of the present invention corresponds to the direct-attached hard disk system provided in the embodiments hereinabove of the present invention, further embodiments of the hard disk sub-board are found in the description of the embodiments of the direct-attached hard disk system.

The embodiments corresponding to the direct-attached hard disk system provided in the present invention are described in detail hereinabove. The present invention further discloses a server corresponding to the direct-attached hard disk system hereinabove.

The server provided in the embodiments of the present invention may include a server motherboard, a direct-attached hard disk system, and a hard disk. The direct-attached hard disk system includes a hard disk sub-board and a backplane board card. The hard disk sub-board includes a hard disk connector and a first hard disk state signal connector. The hard disk sub-board is detachably connected to the backplane board card via the first hard disk state signal connector. An uplink data interface of the hard disk connector is directly connected to a downlink connector of the server motherboard via a high-speed signal line, and a downlink data interface of the hard disk connector is configured to connect to the hard disk. A hard disk state signal and a power signal of the hard disk connector are connected to a backplane controller of the backplane board card via the first hard disk state signal connector.

In a practical application, a plurality of hard disk sub-boards may be mounted on the backplane board card according to requirements. The hard disk sub-boards may be mounted on the backplane board card by being arranged in a row, or a plurality of rows of backplane board cards may also be flexibly arranged on the backplane board card.

The server provided in the embodiments of the present invention is utilized. When the direct-attached hard disk system is mounted, the hard disk sub-board is inserted, via the first hard disk state signal connector in the form of a gold finger, into the second hard disk state signal connector in the form of a gold finger slot on the backplane board card, the hard disk is inserted into a hard disk slot on the hard disk connector of the hard disk sub-board, and the other end of the hard disk connector is connected to the server motherboard via a cable. Then, a high-speed signal, a sideband signal, and a power supply may be transmitted to the hard disk by the hard disk connector and the first hard disk state signal connector on the hard disk sub-board.

A high-speed signal link between the hard disk and the server motherboard is formed by the hard disk connector and the cable. The high-speed signal may include a peripheral component interconnect express bus data signal. A peripheral component interconnect express bus signal includes a peripheral component interconnect express bus read signal and a peripheral component interconnect express bus write signal. A high-speed clock signal may be a peripheral component interconnect express bus clock signal.

The sideband signal and the power supply are transmitted to the hard disk by the hard disk connector and the first hard disk state signal connector. The sideband signal may include a hard disk state indication signal and a hard disk state control signal. The hard disk state indication signal may be a hard disk presence signal. The hard disk state control signal may be a hard disk state indicator lamp control signal corresponding to a hard disk state indicator lamp arranged on the hard disk sub-board. The hard disk state control signal may further include a reset signal. The sideband signal may further include a device hot-swap management signal and a high-speed signal bus reset signal. The power supply may include a +12V voltage (P12V) and a +3.3V standby power supply (+3.3V Standby, P3V3_STBY).

The power supply provided to the hard disk by the backplane board card is from the power supply of the server motherboard. The power supply of the server motherboard supplies power to the backplane board card, is converted into a power supply voltage required by the hard disk by the power connector on the backplane board card, and then provides same to the hard disk via the second hard disk state signal connector of the backplane board card and the first hard disk state signal connector of the hard disk sub-board.

Furthermore, the server motherboard further interacts with the backplane controller on the backplane board card via the solder wire connector and first hard disk state signal connector on the hard disk sub-board and the second hard disk state signal connector of the backplane board card, thereby monitoring the state of the hard disk.

The server provided in the embodiments of the present invention is utilized. The hard disk may be inserted into an insertion slot of the hard disk connector on the hard disk sub-board, and then be connected to the downlink connector of the server motherboard via the cable on the other end of the hard disk connector of the hard disk sub-board. That is, a cable plug is inserted into the downlink connector of the server motherboard, such that the transmission of the high-speed signal between the hard disk and the central processing unit on the server motherboard may be performed via the cable and the hard disk connector.

By applying the server provided in the embodiments of the present invention, the mounting manner of the server motherboard, direct-attached hard disk system, and hard disk may be flexibly designed according to the space in a server chassis.

In some embodiments of the present invention, the backplane board card may be mounted horizontal to the server motherboard, and the hard disk sub-board may be mounted vertically on the backplane board card.

A red cable is the cable between the hard disk sub-board and the downlink connector of the server motherboard. The uplink data interface of the hard disk connector on the hard disk sub-board and the cable led out from a solder wire connector may be encapsulated into a cable bundle to connect to the downlink connector of the server motherboard, such that the hard disk sub-board is connected to the server motherboard via the encapsulated cable bundle.

In some other embodiments of the present invention, the backplane board card may also be mounted vertical to the server motherboard, and the hard disk sub-board is horizontal to the server motherboard and mounted vertically on the backplane board card.

The uplink data interface of the hard disk connector on the hard disk sub-board and the cable led out from the solder wire connector may be encapsulated into the cable bundle to connect to the downlink connector of the server motherboard, such that the hard disk sub-board is connected to the server motherboard via the encapsulated cable bundle.

In order to ensure mounting stability, in some embodiments of the present invention, the hard disk sub-boards may be uniformly arranged on the backplane board card. As introduced in the embodiments hereinabove of the present invention, for ease of design and management, the hard disk sub-boards are designed to be correspondingly connected to the hard disks on a one-to-one basis, such that the number of hard disk sub-boards to be mounted on the backplane board card is determined by the number of hard disks to be connected to the central processing unit of the server motherboard. According to the mounting manner of the hard disk sub-board on the backplane board card, if the hard disk sub-board is horizontally mounted along a long side of the backplane board card, a plurality of rows of hard disk sub-boards may be mounted on the backplane board card, so as to increase the number of hard disk sub-boards, thereby mounting more hard disks.

Since the server provided in the embodiments of the present invention corresponds to the direct-attached hard disk system provided in the embodiments hereinabove of the present invention, further embodiments of the server are found in the description of the embodiments of the direct-attached hard disk system.

In the server provided in the embodiments of the present invention, by designing the hard disk sub-board and the backplane board card, which are detachably connected, on the direct-attached hard disk solution, the hard disk connector and the first hard disk state signal connector are deployed on the hard disk sub-board, and the backplane controller is deployed on the backplane board card. The hard disk sub-board is detachably connected to the server motherboard via the hard disk connector. The uplink data interface of the hard disk connector is connected to the downlink connector of the server motherboard, the downlink data interface of the hard disk connector is connected to the hard disk, and a hard disk state pin of the hard disk connector is connected to the backplane controller of the backplane board card via the first hard disk state signal connector. Therefore, as a server storage architecture iteratively updates, the backplane board card may serve as a universal structure for cross-generation reuse, and the corresponding hard disk sub-boards need to be added according to the number and type of hard disks, such that a highly-reusable direct-attached hard disk solution is implemented, which is low in development difficulty, capable of reducing the variety of backplane designs, and excellent in ventilation and heat dissipation performance in high-density hard disk backplane scenarios, facilitating a reduction in overall noise and power consumption. Moreover, since the backplane board does not need to increase design costs with the increasing of signal rates of the hard disks supported, and on-board routes that are between the hard disks and the server motherboard and pass through the backplane are eliminated, the high-speed signal links are shortened, and the difficulty of impedance design is reduced.

The direct-attached hard disk system, hard disk sub-board, and server provided in the present invention are introduced in detail above. The embodiments are described in the description progressively, with each embodiment focusing on differences from the other embodiments, and with reference to the same or similar parts of the embodiments. The server disclosed in the embodiments is relatively simple to describe since it corresponds to the direct-attached hard disk system disclosed in the embodiments, as explained in the direct-attached hard disk system section. It should be noted that for a person of ordinary skill in the art, without departing from the principles of the present invention, several improvements and modifications may be made to the present invention, which also fall within the scope of protection of the present invention.

It is also to be noted that relational terms such as first, second, and the like are used herein merely to distinguish one entity or operation from another entity or operation and do not necessarily require or imply any actual relationship or order between these entities or operations. Furthermore, terms "comprise", "include" or any other variants are intended to encompass non-exclusive inclusion, such that a process, a method, an article or a device including a series of elements not only include those elements, but also includes other elements not listed explicitly or includes intrinsic elements for the process, the method, the article, or the device. In the absence of further limitations, an element defined by the phrase "comprise a..." does not exclude the existence of additional identical elements in the process, method, article, or device that comprises the element.

## Claims

1. A direct-attached hard disk system, comprising a hard disk sub-board and a backplane board card, wherein
the hard disk sub-board comprises a hard disk connector and a first hard disk state signal connector; the hard disk sub-board is detachably connected to the backplane board card via the first hard disk state signal connector;
an uplink data interface of the hard disk connector is directly connected to a downlink connector of a server motherboard via a high-speed signal line, and a downlink data interface of the hard disk connector is configured to connect to a hard disk; and a hard disk state signal and a power signal of the hard disk connector are connected to a backplane controller of the backplane board card via the first hard disk state signal connector.

2. The direct-attached hard disk system as claimed in claim 1, wherein the uplink data interface of the hard disk connector is connected to the downlink connector of the server motherboard via a high-speed signal cable.

3. The direct-attached hard disk system as claimed in claim 1, wherein the first hard disk state signal connector is connected to a second hard disk state signal connector of the backplane board card in an insertion manner.

4. The direct-attached hard disk system as claimed in claim 1, wherein the direct-attached hard disk system further comprises a limiting apparatus, which is fixedly arranged on the backplane board card and configured to fix the hard disk sub-board, the hard disk sub-board is provided with a snap-fit and a snap-fit loosening structure, and the limiting apparatus is provided with a limiting structure corresponding to the snap-fit and the snap-fit loosening structure.

5. The direct-attached hard disk system as claimed in claim 1, wherein a high-speed signal link of the hard disk connector and a hard disk state signal line between the hard disk connector and the first hard disk state signal connector are arranged at 90°.

6. The direct-attached hard disk system as claimed in claim 1, wherein the high-speed signal line comprises a high-speed clock signal line and a high-speed data signal line.

7. The direct-attached hard disk system as claimed in claim 1, wherein the high-speed signal line is a high-speed data signal line.

8. The direct-attached hard disk system as claimed in claim 1, wherein a reset pin and a device hot-swap management pin of the first hard disk state signal connector are connected to the downlink connector of the server motherboard via a solder wire connector of the hard disk sub-board and a cable.

9. The direct-attached hard disk system as claimed in claim 1, wherein the backplane board card comprises a second hard disk state signal connector, the backplane controller, an inter-integrated circuit connector, a field replaceable unit, a thermal sensor, and a power connector;
the second hard disk state signal connector is configured to connect the first hard disk state signal connector to the backplane controller;
the inter-integrated circuit connector is configured to connect the server motherboard to the backplane controller, and the field replaceable unit and the thermal sensor are connected to the inter-integrated circuit connector; and
the power connector is configured to connect to a power supply of the server motherboard and convert the power supply into a power supply output required by the backplane board card.

10. The direct-attached hard disk system as claimed in claim 9, wherein the backplane board card further comprises an inter-integrated circuit channel switching chip; a first end of the inter-integrated circuit channel switching chip is connected to a second end of the inter-integrated circuit connector; a first end of the inter-integrated circuit connector is connected to an out-of-band monitoring system of the server motherboard; and a second end of the inter-integrated circuit channel switching chip is connected to the first hard disk state signal connectors of the plurality of corresponding hard disk sub-boards via the plurality of the second hard disk state signal connectors.

11. The direct-attached hard disk system as claimed in claim 1, wherein the hard disk sub-board is connected to the hard disk in a one-to-one correspondence.

12. The direct-attached hard disk system as claimed in claim 1, wherein a plurality of hard disk sub-boards are provided, the plurality of the hard disk sub-boards are horizontally arranged and uniformly mounted on the backplane board card.

13. A hard disk sub-board, comprising:
a hard disk connector, wherein an uplink data interface of the hard disk connector is directly connected to a downlink connector of a server motherboard via a high-speed signal line, and a downlink data interface of the hard disk connector is configured to connect to a hard disk; and
a first hard disk state signal connector, the first hard disk state signal connector connected to a backplane controller of a backplane board card and configured to transmit a hard disk state signal and a power signal; and
the hard disk connector and the first hard disk state signal connector are configured as separate components, and the hard disk state signal of the hard disk connector is connected to the first hard disk state signal connector.

14. The hard disk sub-board as claimed in claim 13, wherein the uplink data interface of the hard disk connector is connected to the downlink connector of the server motherboard via a high-speed signal cable.

15. The hard disk sub-board as claimed in claim 13, wherein the first hard disk state signal connector is connected to a second hard disk state signal connector of the backplane board card in an insertion manner.

16. The hard disk sub-board as claimed in claim 13, wherein a high-speed signal link of the hard disk connector and a hard disk state signal line between the hard disk connector and the first hard disk state signal connector are arranged at 90°.

17. The hard disk sub-board as claimed in claim 13, wherein the hard disk sub-board is connected to the hard disk in a one-to-one correspondence.

18. A server, comprising a server motherboard, a direct-attached hard disk system, and a hard disk, wherein
the direct-attached hard disk system comprises a hard disk sub-board and a backplane board card;
the hard disk sub-board comprises a hard disk connector and a first hard disk state signal connector; the hard disk sub-board is detachably connected to the backplane board card via the first hard disk state signal connector;
an uplink data interface of the hard disk connector is directly connected to a downlink connector of the server motherboard via a high-speed signal line, and a downlink data interface of the hard disk connector is configured to connect to the hard disk; and a hard disk state signal and a power signal of the hard disk connector are connected to a backplane controller of the backplane board card via the first hard disk state signal connector.

19. The server as claimed in claim 18, wherein the backplane board card is mounted horizontal to the server motherboard, and the hard disk sub-board is mounted vertically on the backplane board card.

20. The server as claimed in claim 18, wherein the backplane board card is mounted vertically on the server motherboard, and the hard disk sub-board is horizontal to the server motherboard and mounted vertically on the backplane board card.
